# EUROPÄISCHE PATENTANMELDUNG

(11) **EP 1 219 922 A2**
(43) Veröffentlichungstag der Anmeldung: **03.07.2002**
(21) Anmeldenummer: 01130553.9
(22) Anmeldetag: 21.12.2001
(51) Int. Cl.: G01B 11/02, G01B 11/24

(54) **Verfahren zur Verbesserung der Genauigkeit von optischen 3D-Messverfahren**

(30) Priorität: 28.12.2000 DE 10065121
(71) Anmelder: INB Vision AG, 39120 Magdeburg (DE)
(72) Erfinder: Lilienblum, Tilo, Dr., 39104 Magdeburg (DE)
(74) Vertreter: Leinung, Günter

(57) **Zusammenfassung**

Die Erfindung betrifft ein Verfahren zur Verbesserung der Genauigkeit von optischen 3D-Messverfahren, die zur Bilderzeugung mindestens eine Matrixkamera mit einer Bildaufnahmematrix verwenden, deren Rasterweite des Pixelrasters bekannt ist.

Dies wird erreicht, indem für alle Pixel oder eine ausgewählte Teilmenge der Pixel der Bildaufnahmematrix die individuelle Abweichung des Pixelortes in Bezug auf die Sollposition des Pixelortes in dem Pixelraster gemessen, daraus die individuellen exakten Pixelorte ermittelt und diese exakten Pixelorte bei der Berechnung der 3D-Daten berücksichtigt werden.

## Beschreibung

Die Erfindung betrifft ein Verfahren zur Verbesserung der Genauigkeit von optischen 3D-Messverfahren, die mindestens eine Matrixkamera zur Bilderzeugung verwenden.

Derartige Matrixkameras enthalten Bildaufnahmematrizen, welche die Intensitätsverteilung eines Bildes pixelweise erfassen und als Matrix ausgeben können. Beispiele sind der CCD-Sensor und der ebenfalls in Kameras eingesetzte CMOS-Sensor. Die einzelnen Elemente der Bildaufnahmematrix werden als Pixel bezeichnet. Die Position der Pixel der Bildaufnahmematrix wird nachfolgend "Pixelort" genannt, wobei der Pixelort durch die Position des Mittelpunkts des Pixels repräsentiert wird.

Die Berechnung der 3D-Daten eines Objektes aus dessen digitalen Bildern erfolgt nach bekannten Methoden der Stereophotogrammetrie durch Subpixelinterpolation. Ein derartiges Verfahren ist z. B. in der DE 19623172 C1 beschrieben. Unter Subpixelinterpolation versteht man die Berechnung der genauen Lage eines Punktes aus den Werten der umliegenden Pixel. Die Subpixellage ist genauer als das Pixelraster. Zur Subpixelinterpolation können 4(2x2), 9(3x3), 16(4x4) oder auch mehr Pixel verwendet werden.

Bei einer idealen Bildaufnahmematrix sind die Pixelorte in einem idealen Pixelraster mit konstanter Rasterweite angeordnet. Die Pixelorte einer solchen idealen Bildaufnahmematrix sind ideale Pixelorte; ihre Position wird als "Sollposition" bezeichnet. Zur Berücksichtigung von fertigungsbedingten Abweichungen des realen Pixelrasters vom idealen Pixelraster ist es bekannt, ein Referenzrnaß zu vermessen. Beispielsweise kann der Abstand zweier Punkte dadurch vermessen werden, dass die Mittelpunkte beider Punkte bestimmt werden. Zur Bestimmung jedes Mittelpunktes fließen mehrere Pixel mit ein. So mittelt sich ein eventueller Fehler heraus. Den durchschnittlichen Abstand der Pixel kann man so mit großer Genauigkeit bestimmen, da der Gesamtfehler gleich bleibt und der relative Fehler bei entsprechender Pixelanzahl kleiner wird.
Solche Abweichungen des realen Pixelrasters werden normalerweise bereits bei einer Kalibrierung eines 3D-Messsystems [Luhmann, T.: Nahbereichsphotogrammetrie. Wichmann Verlag, Heidelberg] berücksichtigt.

Vergleichende Untersuchungen an hochauflösenden 3D-Messsystemen haben gezeigt, dass 3D-Daten, die mit zwei identisch konfigurierten 3D-Messsystemen gewonnen wurden, deren Bildaufnahmematrizen aus der gleichen Fertigungsserie stammten, stets geringe Abweichungen aufwiesen, die nicht auf bekannte Effekte wie Ungleichförmigkeit der Photoempfindlichkeit oder des Dunkelsignals der Bildaufnahmematrizen zurückführbar waren.

Es wurde gefunden, dass die Genauigkeit von optischen 3D-Messverfahren, die zur Bilderzeugung mindestens eine Matrixkamera mit einer Bildaufnahmematrix verwenden, deren Rasterweite des Pixelrasters bekannt ist, verbessert wird, indem für alle Pixel oder eine ausgewählte Teilmenge der Pixel der Bildaufnahmematrix die individuelle Abweichung des Pixelortes in Bezug auf die Sollposition des Pixelortes in dem Pixelraster gemessen, daraus die individuellen exakten Pixelorte ermittelt und diese exakten Pixelorte bei der Berechnung der 3D-Daten berücksichtigt werden.

Eine Möglichkeit, die individuelle Abweichung des Pixelortes in Bezug auf die Sollposition des Pixelortes in dem Pixelraster zu bestimmen, ist das Scannen der Bildaufnahmematrix mit einem Laser. Für viele Anwender der optischen 3D-Vermessung mit Kameras ist jedoch der Aufwand für eine Anlage zum Scannen der Bildaufnahmematrix mit einem Laser indiskutabel groß.

Eine andere Möglichkeit besteht darin, das von der Anmelderin in der Patentanmeldung DE 100 65 120.8-52 vorgeschlagene Verfahren zur Bestimmung der Abweichung des Pixelortes der Pixel mindestens einer Bildaufnahmematrix von der Sollposition zu verwenden, wobei die Bildaufnahmematrix mindestens während des Verfahrensablaufs Bestandteil eines optischen 3D-Messsystems ist.

Dieses vorgeschlagene Verfahren zeichnet sich dadurch aus, dass
a) ein Objekt bereitgestellt wird, das zur Vermessung mittels des optischen 3D-Messsystems geeignet ist, wobei dieses Objekt eben ist oder eine solche Krümmung aufweist, dass bei der durch die Glättung entsprechende Schritt c nur die lokalen Fehler der 3D-Daten ausgemittelt und nicht die Konturen des Objektes verändert werden,
   (Unter dem lokalen Fehler sollen Fehler wie z. B. die statistische Messunsicherheit verstanden werden. Dieser Fehler grenzt sich insbesondere vom globalen Fehler, also dem Absolutfehler der gemessenen 3D-Koordinaten zum Weltkoordinatensystem ab.)
b) das Objekt durch das 3D-Messsystem vermessen wird und dabei 3D-Daten des Objektes ermittelt werden,
c) danach die ermittelten 3D-Daten des Objektes geglättet werden,
d) die 3D-Messpunkte des Objektes unter Verwendung ihrer sowohl nach Schritt b ermittelten als auch nach Schritt c geglätteten 3D-Daten auf die Sensoren der mindestens einen Matrixkamera rückprojiziert werden,
e) die Differenz zwischen der Position der beiden auf die Sensoren rückprojizierten Punkte ermittelt wird, die einem 3D-Messpunkt zugeordnet sind,
f) danach wahlweise eine Verschiebung zwischen Objekt und optischem 3D-Messsystem erfolgt oder unterlassen wird,
g) die Schritte b bis f solange wiederholt werden, bis die gewünschte Genauigkeit der durch das Verfahren zu bestimmenden Abweichungen des Pixelortes der Pixel einer Bildaufnahmematrix erreicht ist, wobei die Genauigkeit von der Anzahl der Wiederholungen und der Anzahl der Verschiebungen entsprechend Schritt f abhängt,
h) und aus den entsprechend Schritt e ermittelten Werten für jedes Pixel oder für ausgewählte Pixel die Abweichung des Pixelortes der Pixel von der Sollposition bestimmt wird.

Mit dem erfindungsgemäßen Verfahren wird es möglich, bei der Bestimmung der 3D-Daten des Messobjektes diejenigen Abweichungen des Pixelortes der Bildaufnahmematrix zu berücksichtigen, die durch eine Kalibrierung des 3D-Messsystems nicht berücksichtigt werden konnten. Hierdurch kann die Genauigkeit der 3D-Daten erhöht werden.

Vorteilhafte Weiterbildungen der Erfindung ergeben sich aus den Unteransprüchen.

Die Erfindung ist bei allen optischen 3D-Verfahren einsetzbar, bei denen die 3D-Daten aus den Bildern einer Matrixkamera gewonnen werden. Die Erfindung ist insbesondere zur Verbesserung der Ergebnisse des Verfahrens nach DE 19623172 C1 einsetzbar.

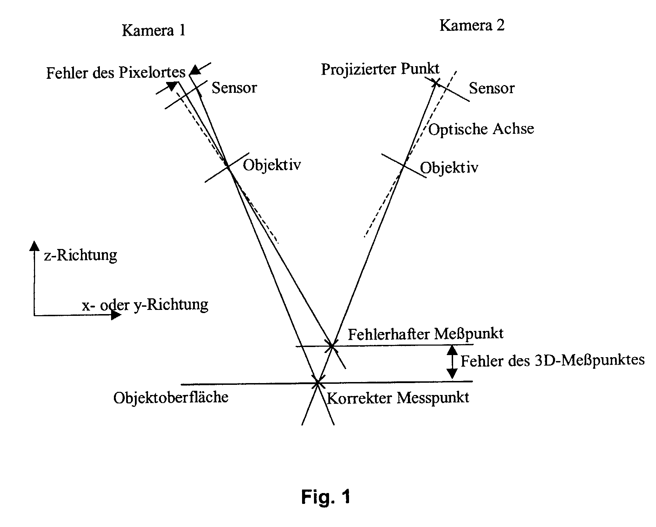

Im folgenden ist die Erfindung anhand eines Ausführungsbeispiels mit weiteren Einzelheiten näher erläutert, wobei auf die beigefügte Zeichnung Bezug genommen wird, welche die Auswirkungen eines Fehlers des Pixelortes einer Kamera auf das Messergebnis veranschaulicht.
Als optisches 3D-Messverfahren, das im Rahmen des Ausführungsbeispiels stellvertretend für verschiedene bekannte optische 3D-Messverfahren verwendet wird, wurde das auf die Anmelderin zurückgehende Verfahren nach DE 19623172 ausgewählt. Durch Verwendung der Erfindung ist es jedoch auch möglich, weitere optische 3D-Messverfahren hinsichtlich einer Verbesserung der Genauigkeit zu modifizieren.
Wenn durch das 3D-Verfahren Messpunkte bestimmt werden, sind diese u. a. auch auf Grund fehlerhafter Pixelorte fehlerbehaftet. In Fig. 1 erfolgt die Ansicht aus Richtung der y-Achse auf die xz-Ebene. Das bedeutet, dass nur ein Fehler des Pixelortes in x- bzw. z-Richtung des Weltkoordinatensystems in dieser Abbildung illustriert wird. Analoge Zusammenhänge ergeben sich auch für eine Sicht aus der x-Richtung auf die yz-Ebene.
In DE 19623172 C1 werden Grauwertfolgen von zwei Kameras miteinander korreliert. Es werden dabei korrespondierende Punkte gesucht. Kriterium für zwei korrespondierende Punkte ist eine maximale Korrelation zwischen zwei Grauwertfolgen. Die Grauwerte für einen bestimmten Punkt an einer bestimmten Stelle in der Bildaufnahmematrix werden durch Subpixelinterpolation bestimmt.
Wenn die Pixelorte nicht exakt vorliegen, liefert die beschriebene Methode der Subpixelinterpolation einen Fehler.
Um den durch den Fehler im Pixelort hervorgerufenen Messfehler zu kompensieren, werden die Gleichungen für die Subpixelinterpolation so modifiziert, dass der genaue Pixelort mit eingeht. Dadurch wird die Fehlerquelle, die durch den Fehler der Pixelorte hervorgerufen wird, ausgeschaltet.

Die exakten individuellen Pixelorte können z. B. mittels eines Laserscanning-Verfahrens oder des weiter oben beschriebenen Verfahrens gemäß Patentanmeldung DE 100 65 120.8-52 bestimmt werden, dass von der Anmelderin vorgeschlagen wurde. Hierbei ist zu beachten, dass das zur Ermittlung der exakten Pixelorte der Bildaufnahmematrix verwendete Objekt ein ebenes Objekt oder ein Objekt mit einer solchen Krümmung ist, bei der durch die Glättung der ermittelten 3D-Daten des Objektes nur die Fehler der 3D-Daten ausgemittelt und nicht die Konturen des Objektes verändert werden.

## Patentansprüche

1. Verfahren zur Verbesserung der Genauigkeit von optischen 3D-Messverfahren, die zur Bilderzeugung mindestens eine Matrixkamera mit einer Bildaufnahmematrix verwenden, deren Rasterweite des Pixelrasters bekannt ist, indem für alle Pixel oder eine ausgewählte Teilmenge der Pixel der Bildaufnahmematrix die individuelle Abweichung des Pixelortes in Bezug auf die Sollposition des Pixelortes in dem Pixelraster gemessen, daraus die individuellen exakten Pixelorte ermittelt und diese exakten Pixelorte bei der Berechnung der 3D-Daten berücksichtigt werden.

2. Verfahren nach Anspruch 1, **dadurch gekennzeichnet, dass**
die individuelle Abweichung des Pixelortes in Bezug auf die Sollposition des Pixelortes in dem Pixelraster bestimmt wird, indem
- ein Objekt bereitgestellt wird, das zur Vermessung mittels des optischen 3D-Messsystems geeignet ist, wobei dieses Objekt eben ist oder eine solche Krümmung aufweist, dass bei der durch die Glättung entsprechende Schritt c nur die lokalen Fehler der 3D-Daten ausgemittelt und nicht die Konturen des Objektes verändert werden,
(Unter dem lokalen Fehler sollen Fehler wie z. B. die statistische Messunsicherheit verstanden werden. Dieser Fehler grenzt sich insbesondere vom globalen Fehler, also dem Absolutfehler der gemessenen 3D-Koordinaten zum Weltkoordinatensystem ab.)
- das Objekt durch das 3D-Messsystem vermessen wird und dabei 3D-Daten des Objektes ermittelt werden,
- danach die ermittelten 3D-Daten des Objektes geglättet werden,
- die 3D-Messpunkte des Objektes unter Verwendung ihrer sowohl nach Schritt b ermittelten als auch nach Schritt c geglätteten 3D-Daten auf die Sensoren der mindestens einen Matrixkamera rückprojiziert werden,
- die Differenz zwischen der Position der beiden auf die Sensoren rückprojizierten Punkte ermittelt wird, die einem 3D-Messpunkt zugeordnet sind,
- danach wahlweise eine Verschiebung zwischen Objekt und optischem 3D-Messsystem erfolgt oder unterlassen wird,
- die Schritte b bis f solange wiederholt werden, bis die gewünschte Genauigkeit der durch das Verfahren zu bestimmenden Abweichungen des Pixelortes der Pixel einer Bildaufnahmematrix erreicht ist, wobei die Genauigkeit von der Anzahl der Wiederholungen und der Anzahl der Verschiebungen entsprechend Schritt f abhängt,
- und aus den entsprechend Schritt e ermittelten Werten für jedes Pixel oder für ausgewählte Pixel die Abweichung des Pixelortes der Pixel von der Sollposition bestimmt wird.

3. Verfahren nach Anspruch 1 oder 2, **dadurch gekennzeichnet, dass** als optisches 3D-Messverfahren das Verfahren nach DE 19623172 verwendet wird.

4. Verfahren nach einem der vorhergehenden Ansprüche, **dadurch gekennzeichnet, dass** die Grauwerte, die zur Berechnung verwendet werden, durch Subpixelinterpolation aus den Grauwerten der exakten Pixelorte ermittelt werden
